# EUROPEAN PATENT SPECIFICATION

(11) **EP 1 264 882 B1**
(45) Date of publication and mention of the grant of the patent: **03.06.2009**
(21) Application number: 02005360.9
(22) Date of filing: 14.03.2002
(51) Int. Cl.: A23L 1/10, A23L 1/0522, A21D 13/06, C08B 30/20, C08B 30/12

(54) **Cereal grains with high total dietary fiber and/or resistant starch content and their preparation thereof**
Getreidekörner mit hohem Gehalt an Ballaststoffen und/oder resistenter Stärke und ihre Herstellung
Grains de céréales à haute teneur en amidon résistant et/ou fibres alimentaires et leur fabrication

(30) Priority: 26.03.2001 US 817419
(43) Date of publication of application: 11.12.2002
(73) Proprietor: BRUNOB II B.V., 6824 BM Arnhem (NL)
(72) Inventor: Shi, Yong-Cheng, Hillsborough, New Jersey 08844 (US); Liu, Yayun, Hillsborough, New Jersey 08844 (US)
(74) Representative: Held, Stephan

(56) References cited:
- EP-A- 0 554 122
- EP-A- 0 846 704
- EP-A- 1 088 832
- US-A- 5 106 634
- US-A- 5 849 090
- US-A- 5 902 410
- BORNET F: "TECHNOLOGICAL TREATMENTS OF CEREALS. REPERCUSSIONS ON THE PHYSIOLOGICAL PROPERTIES OF STARCH" CARBOHYDRATE POLYMERS, APPLIED SCIENCE PUBLISHERS, LTD. BARKING, GB, vol. 21, no. 2 / 3, 1993, pages 195-203, XP000387697 ISSN: 0144-8617
- TUFVESSON F ET AL: "Digestibility of starch systems containing amylose-glycerol monopalmitin complexes." LEBENSMITTEL-WISSENSCHAFT UND -TECHNOLOGIE 34 (3) 131-139 2001 CORRESPONDENCE (REPRINT) ADDRESS, A. C. ELIASSON, DEP. OF FOOD TECH., CENT. FOR CHEM. & CHEM. ENG., LUND UNIV., PO BOX 124, S-221 00 LUND, SWEDEN, XP002265714
- DATABASE WPI Section Ch, Week 199907 Derwent Publications Ltd., London, GB; Class D11, AN 1999-074106 XP002265715 & JP 10 313804 A (NIPPON SHOKUHIN KAKO KK) , 2 December 1998 (1998-12-02)

## Description

This invention relates to a process for preparing cereal grain having increased dietary fiber and/or resistant starch content and the process tolerant grain prepared thereby. Further, this invention provides high amylose grain with unusually high dietary fiber and resistant starch content. In particular, this invention involves the preparation of the improved grain by a combination of moisture and temperature conditions and further to use of the grain in the preparation of products containing starch.

### BACKGROUND OF THE INVENTION

Cereal grains, including wheat, corn (or maize), rice, barley, rye, oats, and sorghum are basic food components of the human diet and contain important nutrients such as dietary fiber and starch.

The consumption of dietary fiber is particularly important to digestive health, and has been implicated as being useful for the prevention or treatment of certain diseases such as colon cancer. Generally, dietary fiber is defined to be the polysaccharides and remnants of plant materials that are resistant to hydrolysis (digestion) by human alimentary enzymes, including nonstarch polysaccharides, resistant starch, lignanin and minor components such as waxes, cutin and suberin. Because of the potential health benefits of foods rich in dietary fiber, many countries have recommended the increased consumption of such foods as a part of their dietary guidelines.

In addition to dietary fiber, grains also store energy in the form of starch. The amount of starch contained in cereal grain varies, but is generally between 60 and 75% of the weight of the grain. Aside from its excellent nutritive value, starch is important because of its effect upon the physical properties of many of our foods, and is an important industrial commodity.

It is known that certain starch processing operations result in the transformation of starch into starch that is resistant to pancreatic amylase, known simply as resistant starch. Resistant starch resists digestion by pancreatic alpha-amylase and absorption in the small intestine, but passes into the large intestine where it is fermented by colonic microflora to short chain fatty acids and gases. Research literature indicates that this fermentation of resistant starch by colonic bacteria has numerous beneficial effects including improving colonic health and reducing the chance of developing diverticulosis and colon cancer. Further, as it is not utilized until it reaches the large intestine, where it is fermented to short chain fatty acids, resistant starch has a reduced caloric value and, in respect of these properties, has the benefits of dietary fiber.

Various methods have been reported for producing various types of resistant starch and focus on modifying starch that is already isolated from the cereal grain. These methods are discussed in U.S. Patent Nos. 5,593,503 and 5,902,410. In particular, U.S. Patent No. 5,593,503 discuss and 5,902,410 a process of treating a high amylose starch, isolated from the grain, having a moisture content of between 10 to 80% and about 10 to 90% respectively at temperatures of between 60° to 160° C thereby providing a granular starch with a total dietary fiber content of at least 12%.

The effect of heat treatment on the resistant starch content of cereal grain has been investigated. For example, Czarnecki et al. reported that the resistant starch content of barley, wheat, maize and triticale grain, as measured by digestibility of the component starch (sensitivity to amylolysis), decreased over grain moisture contents of from 13 to 30% and heat treatment of between 100 to 130° C. Czarnecki et al., Ettect of Heat Treatment on Carbohydrates and Protein in Cereal Grain. Biuletyn Informacyjny Przemyslu Paszowego 23(2): 1-16, 1984.

Generally, the heat/moisture treatment of grains has been reported to increase starch digestibility thereby indicating in decrease in resistant starch content. Alonso et al., Effects of extrusion and traditional processing methods on antinutrients and in vitro digestibility of protein and starch in faba and kidney beans, Food Chemistry 68(2):159-165, 2000; Sagum, R. Arcot J. Effect of domestic processing methods on the starch, non-starch polysaccharide and in vitro starch and protein digestibility of three varieties of rice with varying levels of amylose, Food Chemistry, 70 107-111, 2000; Yakovenko, V.A. Effect of hydrothermal processing of grain on physicochemical properties of starch in maize grits, Izvestiya Vysshikh Uchebnykh Zavedenii, Pishchevaya Tekhonologiya, 1971(6), 66-68; and Yalanov. P.A. et al. Changes in the responsiveness to digestion of proteins and starch contained in the grain and grits of legumes during heat treatment, Vop. Pitan, 1973, (6), 75-9.

In contrast, Barierguillot et al. reported that heat treatment of corn kernels over a range of moisture contents had no effect on the digestibility of the component starch. The heat treatment included the use of a 2-step drying process affording a final grain moisture of 15% and heat treatment at temperatures varying from 80° to 160° C. Barierguillot et al, Effect of Heat Drying Temperature on the Nutritive Value of Corn in Chickens and Pigs, Animal Feed Science and Technology 41(2): 149-159, 1993.

Unsuccessful attempts to increase the dietary fiber content of grain have been reported. For example, Fasina et al, subjected whole hulless and pearled barley to infrared heating at moisture contents of between 12.2% and 26.5% and surface temperatures of between 105 °C to 150 °C. No increase in the total dietary fiber content of the grain was found. Fasina, O.O., Tyler, R.T., Pickard, M.D., Zheng, G.H. Infrared heating of hulless and pearled barley, *Journal of Food Processing and Preservation,* 23(2), pg 135-151 (July 1999).

Surprisingly, it has now been discovered that the total dietary fiber content of cereal grains, particularly high amylose grains, can be significantly increased by heat treatment over a certain moisture range. Further, upon heat treatment, high amylose grains undergo an increase in resistant starch content as well as total dietary fiber content. Moreover, the cereal grains of this invention are uniquely process tolerant and may be processed directly into food products with little or no loss of dietary fiber and resistant starch content.

### SUMMARY OF THE INVENTION

This invention relates to a process for preparing cereal grain having increased dietary fiber and/or resistant starch content and the process tolerant grain prepared thereby. Further, this invention provides high amylose grain with unusually high dietary fiber and resistant starch content. In particular, this invention involves the preparation of the improved grain by selected heat-moisture treatment and further to use of the grain in the preparation of products containing starch.

The method for preparing a grain with increased total dietary fiber content comprising heating a base grain having a total moisture content of from about 8% to about 85% by weight based on the dry weight of the grain, at a temperature of from about 65 C to about 150 °C, under a combination of moisture and temperature conditions to provide a heat-treated grain having an increase in total dietary fiber content ("TDF") of at least 10%.

The improved grains of this invention are uniquely process tolerant and may be processed directly into food with little or no loss of dietary fiber and/or resistant starch content. This invention further includes the improved products which incorporate the heat-treated grain.

### DETAILED DESCRIPTION OF THE INVENTION

This invention relates to a process for preparing cereal grain having increased dietary fiber and/or resistant starch content and the process tolerant grain prepared thereby. Further, this invention provides high amylose grain with unusually high dietary fiber and resistant starch content. In particular, this invention involves the preparation of the improved grain by a combination of moisture and temperature conditions and further to use of the grain in the preparation of products containing starch.

The term "total dietary fiber content" ("TDF") may include the polysaccharides and remnants of plant materials that are resistant to hydrolysis (digestion) by human alimentary enzymes, including nonstarch polysaccharides, resistant starch, lignanin and minor components such as waxes, cutin and suberin. As used herein, TDF is defined as measured by the weight of undigested material separated by filtration as described by the test described, *infra.*

The term "resistant starch (RS) " is defined as the sum of starch and starch degradation products that are not absorbed in the small intestine of healthy individuals and may be measured by a variety of tests known in the art. Resistant starch is defined herein as measured by treatment with pancreatic alpha amylase in the test described, *infra.*

The base grains used in preparing grains with unusually high TDF as well as containing alpha-amylase resistant starch may be any native grain derived from any native source. A native grain as used herein, is one as it is found in nature. Also suitable are grains derived from a plant obtained by standard breeding techniques including crossbreeding, translocation, inversion, transformation or any other method of gene or chromosome engineering to include variations thereof. In addition, grain derived from a plant grown from induced mutations and variations of the above generic composition which may be produced by known standard methods of mutation breeding are also suitable herein.

Typical sources for the base grains are cereals including wheat, corn or maize, rice, barley, rye, sorghum and particularly high amylose-containing varieties thereof, preferably corn. As used herein, the term "high amylose" is intended to include a grain containing starch composed of at least about 40% amylose by weight. Grains having a component starch with a high amylose content have been found to be most suitable for use in this invention, particularly grains of greater than 70% amylose content and most particularly greater than 90% amylose content.

It is well known that starch is composed of two fractions, the molecular arrangement of one being essentially linear and the other being highly branched. The linear fraction of starch is known as amylose and the branched fraction amylopectin. Starches from different grains are characterized by different relative proportions of the amylose and amylopectin components. Some plant species have been genetically developed which produce grain having starches which are characterized by a large preponderance of one fraction over the other. For instance, certain varieties of corn which normally contain about 22 to 28% amylose have been developed which yield grain containing starch composed of over 40% amylose. These hybrid varieties have been referred to as high amylose. High amylose corn hybrids were developed in order to naturally provide grain containing starch of high amylose content and have been available commercially since about 1963.

Another useful base grain containing high amylose starch is extracted from a plant source having an amylose extender genotype, the component starch comprising less than 10% by weight amylopectin. This grain is derived from a plant breeding population, particularly corn, which is a genetic composite of germplasm selections and its starch comprises at least 75% by weight amylose, optionally at least 85% amylose (i.e., normal amylose) as measured by butanol fractionation/exclusion chromatography techniques. The starch further comprises less than 10%, by weight, optionally less than 5%, amylopectin and additionally from about 8 to 25% low molecular weight amylose. The grain is preferably derived from a plant having a recessive amylose extender genotype coupled with numerous amylose extender modifier genes. This grain and its method of preparation are described in U.S. Pat. No. 5,300,145, the specification of which is incorporated herein by reference.

The base grain of this invention also includes grains which have been partially processed by methods well known in the art including, for example, dry milled grains such as degerminated grits or kernels.

The improved grains of this invention are prepared hydrating a base grain to attain a moisture content of between about 8 to 85%, then heat treating said grain at temperatures of between 65° to 150° C, and drying the treated grain. The particular moisture content and heat treatment conditions which provide the improved grains ("heat-treated" grains) are dependent upon the type and processing of the base grain used. In particular, partial processing of the base grain may reduce the necessary moisture content, temperature and time necessary to provide the improved grains of the present invention.

The total moisture or water content of the base grain to be heat-treated will typically be in a range of from about 8 to about 85% by weight, particularly about 15% to about 55%, more particularly from about 20% to about 45% by weight, and most particularly from about 20% to about 35%, based on the weight of the dry grain. The moisture uptake of the grain depends on the amount of water used during hydration, the temperature of the water, the degree of processing or milling of the grains and the botanical source. Hydration may be accomplished by a number of means known in the art, such as steeping in water. This relative level of moisture is maintained during a substantial portion of the heating step and is accomplished by methods known in art, for instance, by heating in a sealed container. After the heat treatment is complete, the grain may be dried further.

The base grain with specified moisture content is typically heated at a temperature of from about 65 to 150°C, particularly from about 90 to 130°C, particularly between about 90 and about 125 °C and most particularly between about 90 and about 120 °C. The most desirable temperature may vary depending on the botanical source of the grain, degree of processing and the moisture content of the grain. Also, the time over which the grain is heated varies according to the base grain source, its degree of processing, moisture content, heating temperature as well as the level of total dietary fiber content desired. Typically, the heating time will be from about 0.5 to 24 hours and particularly from about 1 to 17 hours.

The most desired conditions for treating the grain to obtain a high level of total dietary fiber and/or resistant starch content are such that the granular structure of the starch is not completely destroyed. Under some conditions, such as at high moisture and high temperature, the component starch granule may be partially swollen but its crystallinity not completely destroyed. Accordingly, the term "granular starch" as used herein, means a starch which retains at least part of its granular structure thereby exhibiting some crystallinity, so that the granules are birefringent and the maltese cross is evident under polarized light according to the method described in US 5,849,090.

After heat treatment, the grain may be allowed to dry, for instance by air or belt drying, to reach an equilibrium moisture of between about 10 to about 15% by weight moisture. Other drying means may be used, including the use of fluid bed drying conditions.

The level of increase in dietary fiber content of the heat-treated (and dried) grain will vary depending on the processing conditions used as well as the particular base grain used. In particular, the grains will have at least a 10% increase, more particularly at least 30%, even more particularly at least 40%, and most particularly at least 50%.

Under certain conditions, the heat-treated grains of the present invention having an amylose content of greater than 40% may exhibit a desirable increase in resistant starch content as well as an increase in total dietary fiber content. In order to achieve an increase in both resistant starch and fiber content, the base high amylose grain must be hydrated to a moisture content of between about 20 to about 35% moisture followed by heat treatment at temperatures between about 90 °C to about 120 °C.

The treated grains of this invention may be used in foods directly or ground into flours and used in food to make products with high total dietary fiber content. In addition, the starch contained within the improved grains may be isolated from the improved grains by methods known to those in the art, including for example, by wet-milling the grains and extraction. These grains exhibit a remarkably high process tolerance characterized by the remarkably high retention of dietary fiber and resistant starch content of food into which the grain is processed into.

The heat-treated process tolerant grains of this invention can be identified by their component starches which exhibit a higher gelatinization onset temperature than corresponding, non-heat-treated grains. Further, the component starch of the heat-treated high-amylose grains of the present invention also show an increase in starch gelatinization enthalpy delta H as well as increases in the gelatinization onset temperature as compared to starch of the corresponding non-treated high-amylose grains.

The starch gelatinization enthalpy "represents net thermodynamic qualities of different events: granule-swelling and crystallite melting (endothermic) and hydration and recrystallization (exothermic)" processes (Thermal analysis of foods, edited by V. R. Harwalkar and C.-Y. Ma, Elsevier Applied Science, 1990).

The improved grains of this invention may be used in any food or beverage product (hereinafter collectively referred to as foods) to contribute to the total dietary fiber and resistant starch present as well as to reduce the caloric content. Typical food products include, but are not limited to, cereals such as ready-to-eat, puffed or expanded cereals and cereals which are cooked before eating; baked goods such as breads, crackers, cookies, cakes, muffins, rolls, pastries and other grain-based ingredients; pasta; beverages; fried and coated foods; snacks; and cultured dairy products such as yogurts, cheeses, and sour creams.

The amount of granular resistant starch and dietary fiber derived from the improved grain of this invention which can be added and used in any given food will be determined to a great extent by the amount that can be tolerated from a functional standpoint. In other words, the amount of granular resistant starch and fiber used generally will be as high as will be acceptable in organoleptic evaluation of the food.

The improved grain of this invention may also be used to prepare a pharmaceutical or nutritional product, including but not limited to, prebiotic and synbiotic compositions, diabetic foods and supplements, dietetic foods, foods to control glycemic response, and tablets and other pharmaceutical dosage forms. A prebiotic composition is a nondigestible food ingredient that beneficially affects the host by selectively stimulating the growth, activity or both of one or a limited number of bacterial species already resident in the colon. A synbiotic composition may be a yogurt, capsule or other form of introduction into the host animal, including human beings, in which prebiotics are used in combination with a live microbial food supplement. The live microbial food supplement beneficially affects the host animal by improving its intestinal microbial balance.

Such live microbial food supplements may include, without limit, yeasts such as Saccharoymyces, and bacteria such as the genera Bifobacterium, Bacteriodes, Clostridium, Fusobacterium, Propionibacterium, Streptococcus, Enterococcus, Lactococcus, Staphylococcus, Peptostreptococcus and Lactobacillus.

### EXAMPLES

The following examples are presented to further illustrate and explain the present invention and should not be taken as limiting in any regard. All parts and percentages are given by weight and all temperatures in degrees Celsius (°C ) unless otherwise noted.

The following ingredients were used throughout the examples.

Normal maize commercially available from National Starch and Chemical Company.

Long grain brown rice grain commercially available from Arrowhead Mills. (11%M).

Pearled barley grain commercially available from Arrowhead Mills (11.8%M).

High amylose barley, cultivar Glacier, available from Western Plant Breeders, Inc. (Boseman, Montana).

Whole wheat grain commercially available from Arrowhead Mills (11.9% M).

HYLON^{®} V Grain is a high amylose starch containing at least about 50% amylose commercially available from National Starch and Chemical Company.

HYLON^{®} VII Grain is a high amylose starch containing at least about 70% amylose commercially available from National Starch and Chemical Company.

Low amylopectin grain ("LAPS"), the grain and method of preparing such grain is disclosed in U.S. Patent No. 5,300,145.

Pancreatin, product #P-7545, commercially available from Sigma Chemical company.

The following test procedures were used throughout the examples.

### A. Resistant Starch ("RS") Determination

A 0.1 M sodium phosphate buffer solution (pH = 6.9) was prepared from Na₂HPO₄ and NaH₂PO₄. Porcine Pancreatin (1 gram, Sigma P7545) was added to the phosphate buffer solution (20 ml). After equilibrating for 20 minutes the suspension was centrifuged at 10,000 rpm for 5 minutes and the supernatant was kept on ice to afford the enzyme solution. Phosphate buffer was then added to anhydrous ground grain (5 grams, grain was ground to less than a 355 micron particle size) to a total weight of 42 grams and equilibrated at 37° C for five minutes. The enzyme solution (8 grams) was then added to the mixture which was then incubated in a shaker bath at 37°C at 150 rpm for 6 hours. After digestion the mixture was then centrifuged at 10,000 rpm at 5° C for 10 minutes. The supernatant was discarded and the remaining solid air-dried overnight. The dried solid was weighed and its moisture content measured according to the procedure described herein, *infra.* The resistant starch content was calculated based on the remaining anhydrous grain content according to the following equation: RS% = remaining weight x (1-moisture%)/5.

### B. Total Dietary Fiber Determination ("TDF")

The grain was ground to a particle size of less than 355 microns and added to a mixture of Termamyl® 120L solution (0.05 ml, alpha-amylose commercially available from Novo-Nordisk)) and a 2-[N-morpholino]ethanesulfonic acid ("MES")/[hydroxymethyl]amino-methane ("TRIS") buffer solution (0.5 ml, commercially available from Aldrich), and deionized water added to bring the total sample weight to 50.00 grams. The sample was mixed on a vortex mixer for two minutes, then allowed to digest on a boiling water bath for two hours, mixing every 20 minutes to ensure a homogeneous solution. The solution was then placed on ice, filtered under vacuum and the resultant filter cake was washed with deionized water twice and air-dried overnight. After measuring the total weight and moisture content (procedure described herein, *infra.)* of the dried filter cake, the total dietary fiber content was calculated according to the following equation: TDF% = remaining weight x (1-M%)/7.5.

### C. Moisture Content ("M%") Determination

The moisture content of the grains (ground to a particle size of less than 355 microns) were determined by the CENCO moisture balance (balance set to 125 Watts on infrared, available from CSC Scientific Co., Inc.). To avoid charring of the samples, the temperature in the moisture balance was set to 70 °C. The readings obtained by this method are within 0.6% of absolute when checked against an oven moisture analysis method (AACC method 44-15A for corn grits).

### D. Differential Scanning Calorimetry ("DSC") Measurements

Differential scanning calorimetry measurements were performed in a Perkin-Elmer DSC-7 (Norwalk, Ct, U.S.A.). The instrument was calibrated with indium. Samples (approximately 10 mg calculated dry weight of grain ground to a particle size of less than 355 microns) at a grain-to-water ratio of 1:3 were prepared and heated from 10°C to 160°C at a rate of 10°C/minute. The sample was quench-cooled to 10 °C and re-scanned from 10 °C to 160 °C at a rate of 10 °C/minute. An empty stainless-steel pan was used as a reference.

Delta H of the gelatainization of cereal grain is calculated by integration of the area under the endothermic peak in the first DSC curve obtained via the foregoing method.

### E. Dry-milling or degermination procedure

Dry-milled or degerminated grains used in the following examples were dry-milled or degerminated according to the procedures described in Yuan, Jian and Flores, Roland, Laboratory Dry-Milling Peformance of White Corn: Effect of Physical and Chemical Corn Characteristics, Cereal Chem. 7, pg 574, 3(5): 574- 578 (1996).

For example, cleaned dent corn was tempered to 24% moisture content by weight before degermininating. Tempered corn samples were then sent to a laboratory to be dehulled/degerminated. The samples were then dried at 49°C to a 17% moisture content by weight over one hour. The dried grits and germs were then separated according to density by floating the grits and germs in a sodium nitrate solution having a specific density of 1.22 g/ml.

### Example 1 - Preparation of Grains with High TDF Content

This example illustrates the procedure for preparing the treated grains of the present invention.

Kernels or grains of normal maize and high amylose-containing grain including Hylon® V, Hylon® VII and LAPS grains (50 grams each) were steeped in excess water for various periods of time to attain a moisture content of between 5 to about 55% by weight by the dry grain. The excess water was drained off, the kernels towel dried and their moisture content determined via the moisture balance test described above. Water uptake of the dry-milled corn kernels varied according to botanical source and degree of milling.

The kernels were then heat-treated in an oven in a sealed jar for 0.5 to 24 hours, at temperatures of from about 65 to 150 °C. After heating, the kernels were air-dried overnight, then ground, then analyzed according to the above procedures for TDF and RS content. TDF and RS content varied according to the moisture content of the steeped grains and the temperature at which the heat treatment was conducted.

### Example 2 - Effect of Heat Treatment on the TDF Content of Grains from a Variety of Sources

This example illustrates the desirable increase in TDF exhibited by grains obtained from a variety of sources upon heat treatment after hydration to attain a certain moisture.

Several whole grains (not degerminated) were steeped to between 24% to about 42% moisture content and heated between 80 °C to about 120 °C in order to evaluate the effect of the treatment upon the grain TDF and RS content. Grains tested included long grain rice, whole grain wheat, pearled barley, high amylose barley, and Hylon® VII Grain which have amylose contents of 19%, 28%, 26%, 41%, and 73%, respectively by weight of the starch. The TDF values of the non-treated and heat-treated whole grains were measured as discussed in the procedure above and are reported in Table 1.

**TABLE 1**

| **Sample** | **TDF (%)** | **TDF (%) Treated** | **Conditions (%M, Temp. °C, duration)** |
|---|---|---|---|
| Wheat | 26.1 | 33.1 | 24.8%, 100°, 16 hrs |
| P. Barley | 44.0 | 52.2 | 31.2%, 120°; 1.0 hr |
| Rice | 28.1 | 38.8 | 25.6%, 110°, 16.0 hrs |
| High amylose barley | 56.3 | 60.5 | 34.5%, 80°, 6 hrs |
| Hylon VII | 63.4 | 81.1 | 41.4% 110°, 17 hrs |

The data reported in Table 1 demonstrates that upon moisture and heat-treatment according to the procedure of Example 1, the TDF content of grains from a variety of sources may be desirably increased.

### Example 3 - Effect of Temperature and Moisture Content ("M%") on the Heat Treatment of Low Amylose Grains

This example describes the temperature and moisture content dependence of the TDF and RS content of heat-treated normal maize grains which had been dry-milled into grit and steeped to attain a moisture content of at least 13.1%.

**TABLE 2**

| **Properties of normal maize (grit) heat-treated at variable temperature and moisture content** | | | |
|---|---|---|---|
| Time (hour | M% | Tₒᵥₑₙ (°C) | TDF (%) |
| 0 | 13.1 | -- | 12.1 |
| 16 | 13.1 | 110 | 11.9 |
| 16 | 17.5 | 100 | 13.9 |
| 16 | 35.9 | 80 | 17.7 |
| 16 | 30.0 | 100 | 23.3 |
| 16 | 35.9 | 110 | 12.4 |

As can be seen from the data reported in Table 2, in normal maize the TDF increases as moisture content increases over a temperature range of from greater than 75 °C to less than 110 °C and a moisture content of greater than 10 and less than 50%. Thus, the grains had to be hydrated before heat-treating in order to effect an increase in TDF content.

### Example 4 ― Effect of Temperature and Moisture Content ("M%") on the Heat Treatment of High Amylose Grains

This example illustrates the effect of moisture and temperature on the desirable increase in TDF of heat-treated high amylose grains.

Samples of degerminated high amylose grains (Hylon® V, Hylon® VII, and LAPS Grains) were steeped to varying moisture contents and heat-treated at a variety of temperatures according to the method described in Example 1.

**TABLE 3**

| **Properties of Heat-treated High Amylose Grain** | | | | |
|---|---|---|---|---|
| **Sample Grain** | **Time (hours)** | **M%** | **Tₒᵥₑₙ (°C)** | **TDF (%)** |
| **Hylon® V** sample 1 | 0 | 9.4 | -- | 33.0 |
| sample 2 | 16 | 9.4 | 80 | 39.3 |
| sample 3 | 16 | 44.1 | 80 | 46.4 |
| sample 4 | 16 | 43.6 | 110 | 54.2 |
| **Hylon® VII** Sample 1 | 0 | 10.3 | -- | 55.5 |
| Sample 2 | 16 | 10.3 | 80 | 58.1 |
| Sample 3 | 16 | 47.7 | 80 | 61.6 |
| Sample 4 | 16 | 10.3 | 110 | 53.0 |
| Sample 5 | 16.0 | 48.2 | 110 | 64.0 |
| **LAPS** Sample 1 | 0 | 11.2 | -- | 64.2 |
| Sample 2 | 16.0 | 11.2 | 80 | 57.5 |
| Sample 3 | 16.0 | 42.4 | 100 | 75.3 |
| Sample 4 | 16.0 | 11.2 | 110 | 68.8 |
| Sample 5 | 16.0 | 48.9 | 110 | 78.7 |

The results reported in Table 3 indicate that, under selected conditions, TDF content of a grain having between 50 to 60% amylose may be increased to over 45%, a grain having between about 70-90% amylose may be increased to over 60% and a grain having over 90% amylose may be increased to over 75%.

### Example 5 ― Effect of Treatment Time on the TDF of High Amylose Grain

Under certain temperature and moisture content conditions, the increase in TDF values of a high amylose grain (degerminated grits, Hylon® V Grain) was directly related to the duration of the heat treatment.

**TABLE 4**

| **Properties of Heat-treated Grain Containing Hylon V® at constant Temperature over Time** | | | |
|---|---|---|---|
| Time (hour | M% | Tₒᵥₑₙ (°C) | TDF (%) |
| 0 | 9.4 | -- | 33.0 |
| 4.0 | 27.6 | 90 | 39.5 |
| 7.5 | 27.6 | 90 | 36.6 |
| 16.0 | 26.3 | 90 | 45.4 |

As shown in the Table 4, upon heat treatment over a period of 16 hours at 90 °C and a virtually constant moisture content, the TDF values for Hylon® V Grain increase from 33.0 to 45.5.

### Example 6 - Simultaneous increase in both TDF and RS of High Amylose Grains

Under certain conditions the heat-treated high amylose grains of the present invention show a desirable increase in RS as well as TDF.

**TABLE 5**

| **Simultaneous Increase in TDF and RS of Heat-Treated High Amylose Grains (degerminated grits)** | | | | | |
|---|---|---|---|---|---|
| **Sample** | **TDF (%)** | **TDF (%) Treated** | **RS(%)** | **RS(%) Treated** | **Conditions (%M, Temp., duration)** |
| Hylon®V Grain | 33.0 | 40.2 | 71.1 | 75.3 | 31.9%, 100 °C, 16 hrs |
| Hylon®VII Grain | 55.5 | 72.3 | 70.0 | 72.8 | 27.5%, 100 °C, 16 hrs |
| LAPS | 64.2 | 77.4 | 65.2 | 71.5 | 24.2%, 100 °C, 16 hrs |

The data in Table 5 show that a grain with an amylose content of greater than 40% (Hylon® V Grain) provided a TDF and RS increase of 7.2% and 4.2%, respectively; a grain with an amylose content of greater than 70% had a TDF and RS increase of 16.8% and 2.8%, respectively; and a very high amylose grain (LAPS) with an amylose content of greater than 90% gave a TDF and RS increase of 12.2% and 6.3%, respectively.

### Example 7 ― Process Tolerance of Heat-treated Grains

Low amylose and high amylose grains were heat-treated at 100 °C at various moisture contents ("M%") for 16 hours and dried according to Example 1 and their onset temperatures measured in order to evaluate their tolerance for processing into foods. Delta H and onset temperatures were measured by DSC as described in Procedure D.

**TABLE 6**

| **Process Tolerance of Heat-Treated Grains** | | | | | |
|---|---|---|---|---|---|
| **Sample** | **Treatment conditions** | **Onset T (°C) of non- treated grain** | **Onset T (°C) of heat- treated grain** | **Delta H (J/g) of non- treated grain** | **Delta H (J/g) of heat- treated grain** |
| Normal maize | 30.0%M, 100°C, 16hrs | 64.6 | 80.5 | 14.54 | 8.36 |
| Hylon® V Grain | 27.6%M, 100°C, 16hrs | 67.3 | 85.6 | 8.31 | 13.56 |
| Hylon ®VII Grain | 27.5%M, 100°C, 16hrs | 70.1 | 91.7 | 9.02 | 18.45 |
| LAPS | 28.4%M, 100°C, 16hrs | 82.2 | 92.3 | 3.22 | 12.40 |
| High amylose barley | 26.5%M, 80°C, 6 hrs | 59.8 | 69.2 | 5.20 | 5.91 |
| Rice | 25.6%M, 110°C, 16hrs | 72.6 | 81.9 | 19.12 | 14.45 |
| Wheat | 24.8%M, 100°C, 16hrs | 57.4 | 67.7 | 7.02 | 6.00 |

As reported in Table 6, all the heat-treated and dried grains of the present invention demonstrate an improved process tolerance as reflected by the delay in onset temperature as compared to the non-treated grains.

In addition, the heat-treated high amylose grains of the present invention (high amylose barley, HYLON® V & VII, and LAPS) demonstrate increases in delta H as well as in onset temperature. Such a combination of increased delta H and increased onset temperature indicates a highly process tolerant grain which may be processed into foods without substantially losing the resistant starch and fiber content as the grains are processed into useful products via methods common in industrial and food applications.

## Claims

1. A method for preparing a grain with increased total dietary fiber content comprising heating a base grain having a total moisture content of from about 8% to about 85% by weight based on the dry weight of the grain, at a temperature of from about 65 C to about 150 °C, under a combination of moisture and temperature conditions to provide a heat-treated-grain having an increase in total dietary fiber content ("TDF") of at least 10%.

2. The method according to Claim 1, wherein the granular structure of the heat-treated grain is not completely destroyed.

3. The method according to Claim 1 or 2, wherein the base grain contains a component starch having at least 40% by weight amylose content.

4. The method according to any one of Claims 1 to 3, wherein the total moisture content of the base grain is from about 24% to about 55% and the temperature is between about 90 °C to about 125 °C.

5. The method according to any one of Claims 1 to 4, wherein the base grain is corn.

6. The method according to any one of Claims 1 to 5, wherein the base grain contains a component granular starch that has at least 65% by weight amylose content.

7. The method according to any one of Claims 1 to 6, wherein the base grain is degerminated.

8. The method according to any one of Claims 1 to 3 or 5 to 7, wherein the total moisture content of the base grain is from about 20% to about 45% and the temperature is between about 90 °C to about 125 °C.

9. The method according to any one of Claims 1 to 8, wherein the base grain is obtained from a plant source having an amylose extender genotype, the component granular starch comprising less than 10% amylopectin determined by butanol fractionation/exclusion chromatography measurement.

10. The method according to any one of Claims 1 to 3 or 5 to 9 wherein the base grain has a total moisture content of from about 20% to about 35% and the heating is at a temperature of from about 90 to 120°C.

11. A grain made by the method of any one of Claims 1 to 10.

12. The grain of Claim 11 having an increase in TDF content of greater than 30%.

13. The grain of any one of Claims 11 to 12, wherein the starch gelatinization enthalpy delta H value has been increased over that of the untreated grain.

14. The grain of any one of Claims 11 to 13, wherein TDF and RS have been increased over that of the untreated grain.

15. The grain of any one of Claims 11 to 14, wherein the amylose content is between about 50 to about 69% by weight of the component starch and having a TDF of at least than 45%.

16. The grain of any one of Claims 11 to 14, wherein the amylose content of the component starch is between about 70 and about 89% and having a TDF content of at least 58%.

17. The grain of any one of Claims 11 to 14, wherein the amylose content of the component starch is greater than 90% and having a TDF content of at least 75%.

18. A starch isolated from the heat-treated grain of any one of Claims 11 to 17.

19. A food product comprising the grain of any one of Claims 11 to 17.

20. The food product of Claim 19, wherein said product is selected from the group consisting of a cereal, a bread, a cracker, a cookie, a cake, a pasta, a beverage, a fried food, a coated food, a snack, a dairy product, and a cheese.

## Patentansprüche

1. Verfahren zur Herstellung von Getreidekörnern mit erhöhtem Gesamtballaststoffgehalt umfassend Erhitzen von Basisgetreidekörnern, die einen Gesamtfeuchtigkeitsgehalt von etwa 8 Gewichts-% bis etwa 85 Gewichts-%, bezogen auf das Trockengewicht der Getreidekörner, haben, bei einer Temperatur von etwa 65 °C bis etwa 150 °C unter einer Kombination von Feuchtigkeits- und Temperaturbedingungen, um hitzebehandelte Getreidekörner, die eine Erhöhung beim Gesamtballaststoffgehalt ("TDF") von wenigstens 10 % aufweisen, bereitzustellen.

2. Verfahren gemäß Anspruch 1, wobei die körnige Struktur der hitzebehandelten Getreidekörner nicht vollständig zerstört wird.

3. Verfahren gemäß Anspruch 1 oder Anspruch 2, wobei die Basisgetreidekörner eine Komponente Stärke enthalten, die einen Amylosegehalt von wenigstens 40 Gewichts-% hat.

4. Verfahren gemäß einem der Ansprüche 1 bis 5, wobei der Gesamtfeuchtigkeitsgehalt der Basisgetreidekörner von etwa 24 % bis etwa 55 % ist und die Temperatur zwischen etwa 90 °C und etwa 125 °C ist.

5. Verfahren gemäß einem der Ansprüche 1 bis 4, wobei die Basisgetreidekörner Mais bzw. Weizen sind.

6. Verfahren gemäß einem der Ansprüche 1 bis 5, wobei die Basisgetreidekörner eine Komponente körnige Stärke enthalten, die einen Amylosegehalt von wenigstens 65 Gewichts-% hat.

7. Verfahren gemäß einem der Ansprüche 1 bis 6, wobei die Basisgetreidekörner entkeimt werden.

8. Verfahren gemäß einem der Ansprüche 1 bis 3 oder 5 bis 7, wobei der Gesamtfeuchtigkeitsgehalt der Basisgetreidekörner etwa 20 % bis etwa 45 % ist und die Temperatur zwischen etwa 90 °C und etwa 125 °C ist.

9. Verfahren gemäß einem der Ansprüche 1 bis 8, wobei die Basisgetreidekörner aus einer Pflanzenquelle mit einem Amylosegehalt-Genotyp erhalten werden, die Komponente körnige Stärke weniger als 10 % Amylopektin, bestimmt durch Butanolfraktionierungs-/ Ausschlusschromatographie-Messung, umfasst.

10. Verfahren gemäß einem der Ansprüche 1 bis 3 oder 5 bis 9, wobei die Basisgetreidekörner einen Gesamtfeuchtigkeitsgehalt von etwa 20 % bis etwa 35 % haben und das Erhitzen bei einer Temperatur von etwa 90 bis 120 °C erfolgt.

11. Getreidekörner, die durch das Verfahren gemäß einem der Ansprüche 1 bis 10 hergestellt sind.

12. Getreidekörner gemäß Anspruch 11, die eine Erhöhung beim TDF-Gehalt von größer als 30 % aufweisen.

13. Getreidekörner gemäß einem der Ansprüche 11 bis 12, bei denen der Stärkegelatinierungsenthalpie-deltaH-Wert gegenüber dem der unbehandelten Getreidekörner erhöht ist.

14. Getreidekörner gemäß einem der Ansprüche 11 bis 13, bei denen TDF und RS gegenüber denen des unbehandelten Getreides erhöht sind.

15. Getreidekörner gemäß einem der Ansprüche 11 bis 14, bei denen der Amylosegehalt zwischen etwa 50 und etwa 69 Gewichts-% der Komponente Stärke ist und die einen TDF von wenigstens 45 % haben.

16. Getreidekörner gemäß einem der Ansprüche 11 bis 14, bei denen der Amylosegehalt der Komponente Stärke zwischen etwa 70 und etwa 89 % ist und die einen TDF-Gehalt von wenigstens 58 % haben.

17. Getreidekörner gemäß einem der Ansprüche 11 bis 14, bei denen der Amylosegehalt der Komponente Stärke größer als 90 % ist und die einen TDF-Gehalt von wenigstens 75 % haben.

18. Stärke, die aus den hitzebehandelten Getreidekörnern gemäß einem der Ansprüche 11 bis 17 isoliert wurde.

19. Nahrungsmittelprodukt, das die Getreidekörner nach einem der Ansprüche 11 bis 17 umfasst.

20. Nahrungsmittelprodukt gemäß Anspruch 19, wobei das Produkt aus der Gruppe, bestehend aus einer Cerealie, einem Brot, einem Cracker, einem Cookie, einem Kuchen, einer Pasta, einem Getränkt, einem gefrorenen Nahrungsmittel, einem beschichteten Nahrungsmittel, einem Snack, einem Molkereiprodukt und Käse, ausgewählt ist.

## Revendications

1. Procédé pour préparer un grain de céréale ayant une teneur accrue en fibre alimentaire totale, comprenant le chauffage d'un grain de céréale de base ayant une teneur en humidité totale d'environ 8 % à environ 85 % en poids, par rapport au poids sec du grain, à une température d'environ 65°C à environ 150°C, dans une combinaison de conditions d'humidité et de température convenant pour donner un grain traité thermiquement présentant un accroissement de la teneur en fibre alimentaire totale ("FAT") d'au moins 10 %.

2. Procédé selon la revendication 1, dans lequel la structure granulaire du grain traité thermiquement n'est pas complètement détruite.

3. Procédé selon la revendication 1 ou 2, dans lequel le grain de base contient un composant amidon ayant une teneur en amylose d'au moins 40 % en poids.

4. Procédé selon l'une quelconque des revendications 1 à 3, dans lequel la teneur en humidité totale du grain de base est d'environ 24 % à environ 55 %, et la température se situe entre environ 90°C et environ 125°C.

5. Procédé selon l'une quelconque des revendications 1 à 4, dans lequel le grain de base est du maïs.

6. Procédé selon l'une quelconque des revendications 1 à 5, dans lequel le grain de base contient un composant amidon granulaire ayant une teneur en amylose d'au moins 65 % en poids.

7. Procédé selon l'une quelconque des revendications 1 à 6, dans lequel le grain de base est dégermé.

8. Procédé selon l'une quelconque des revendications 1 à 3 ou 5 à 7, dans lequel la teneur en humidité totale du grain de base est d'environ 20 % à environ 45 % et la température se situe entre environ 90°C et environ 125°C.

9. Procédé selon l'une quelconque des revendications 1 à 8, dans lequel le grain de base est obtenu à partir d'une source végétale ayant un génotype amylose-extender, le composant amidon granulaire comprenant moins de 10 % d'amylopectine comme déterminé par mesure par fractionnement avec du butanol/chromatographie d'exclusion.

10. Procédé selon l'une quelconque des revendications 1 à 3 ou 5 à 9, dans lequel le grain de base a une teneur en humidité totale d'environ 20 % à environ 35 % et le chauffage est effectué à une température d'environ 90 à 120°C.

11. Grain de céréale préparé par le procédé de l'une quelconque des revendications 1 à 10.

12. Grain selon la revendication 11, présentant un accroissement de la teneur en FAT supérieur à 30 %.

13. Grain selon l'une quelconque des revendications 11 ou 12, dans lequel la valeur delta H d'enthalpie de gélatinisation de l'amidon a été accrue par rapport à celle du grain non traité.

14. Grain selon l'une quelconque des revendications 11 à 13, dans lequel la FAT et l'AR ont été accrus par rapport à ceux du grain non traité.

15. Grain selon l'une quelconque des revendications 11 à 14, dans lequel la teneur en amylose est comprise entre environ 50 et environ 69 % en poids du composant amidon et ayant une teneur en FAT d'au moins 45 %.

16. Grain selon l'une quelconque des revendications 11 à 14, dans lequel la teneur en amylose du composant amidon est comprise entre environ 70 et environ 89 % et ayant une teneur en FAT d'au moins 58 %.

17. Grain selon l'une quelconque des revendications 11 à 14, dans lequel la teneur en amylose du composant amidon est supérieure à 90 % et ayant une teneur en FAT d'au moins 75 %.

18. Amidon isolé du grain traité thermiquement de l'une quelconque des revendications 11 à 17.

19. Produit alimentaire comprenant le grain de l'une quelconque des revendications 11 à 17.

20. Produit alimentaire selon la revendication 19, dans lequel ledit produit est choisi dans le groupe formé par des céréales, un pain, un biscuit salé, un biscuit, un gâteau, des pâtes alimentaires, une boisson, un aliment frit, un aliment enrobé, un aliment de collation, un produit laitier et un fromage.
